# EUROPEAN PATENT SPECIFICATION

(11) **EP 2 796 524 B1**
(45) Date of publication and mention of the grant of the patent: **08.06.2016**
(21) Application number: 12860386.7
(22) Date of filing: 11.12.2012
(51) Int. Cl.: C09K 3/10, B32B 27/00, B65D 30/02, B65D 65/40, C08L 23/04, C08L 45/00

(54) **RESIN COMPOSITION FOR SEALANT, LAMINATED FILM, AND PACKAGING BAG**
HARZZUSAMMENSETZUNG FÜR EIN DICHTMITTEL, LAMINIERTE FOLIE UND VERPACKUNGSBEUTEL
COMPOSITION DE RÉSINE POUR PRODUIT D'ÉTANCHÉITÉ, FILM STRATIFIÉ ET SAC D'EMBALLAGE

(30) Priority: 22.12.2011 JP 2011281366
(43) Date of publication of application: 29.10.2014
(73) Proprietor: Fujimori Kogyo Co., Ltd, Shinjuku-ku, Tokyo 160-0023 (JP)
(72) Inventor: KASHIMA Kousuke, Tokyo 160-0023 (JP); OKAMOTO Hajime, Tokyo 160-0023 (JP); INADA Masakazu, Tokyo 160-0023 (JP); YOSHIDA Mihoko, Tokyo 160-0023 (JP)
(74) Representative: Tischner, Oliver
(86) International application number: PCT/JP2012/082046
(87) International publication number: WO 2013/094472

(56) References cited:
- DE-A1-102008 051 399
- JP-A- H06 271 716
- JP-A- 2008 207 823
- JP-A- 2008 517 079
- JP-A- 2010 031 252
- JP-A- 2010 077 391
- JP-A- 2010 077 391

## Description

### Technical Field

The present invention relates to a resin composition for a sealant that is excellent in terms of non-absorption properties and barrier properties with respect to an organic compound having a low molecular weight and is capable of stable heat sealing, a laminated film and a packaging bag.

Priority is claimed on Japanese Patent Application No. 2011-281366, filed December 22, 2011, the contents of which are incorporated herein by reference.

### Background Art

A packaging film of the related art for which a polyolefin-based resin is used as a sealant has poor non-absorption properties and barrier properties with respect to an organic compound having a low molecular weight and thus has defects of flavor deterioration from absorbing an odor component from food, beverage, cosmetic or the like or efficacy degradation due to intrusion or adsorption of a small amount of an active component from cosmetic, medicine or the like. In addition, in a packaging film, there is a problem in that an adhesive layer, an anchoring agent layer, a printed layer and the like in the packing film may be adversely affected by intrusion of an odor component coming from a product contained or by intrusion of an organic component such as an alcohol or a surfactant, and as a result, the lamination strength between the layers is weakened and delamination (detachment) occurs.

Patent Document 1 describes a resin composition containing 100 parts by mass of a cycloolefin-based resin mixture made up of 65 mass% to 92 mass% of an amorphous cycloolefin copolymer (COC) and 8 mass% to 35 mass% of an amorphous cycloolefin polymer (COP),and 7 parts by mass to 30 parts by mass of low-density polyethylene.

Patent Document 2 describes a thermoplastic resin composition made up of 2 weight% to 98 weight% of a cyclic olefin-based copolymer (COC obtained by copolymerizing cyclic olefin and α-olefin) having a glass transition temperature (Tg) of 30°C or lower and 98 weight% to 2 weight% of a thermoplastic resin.

### Citation List

### Patent Document

[Patent Document 1] Japanese Unexamined Patent Application, First Publication No. 2010-77391
[Patent Document 2] Japanese Unexamined Patent Application, First Publication No. 5-271484

### Summary of Invention

### Technical Problem

In the case of Patent Document 1, since the blending amount of COC is great, there is a problem in that, compared with COP, it is more likely that the above-described organic component in an article contained is adsorbed to a sealant when making the packaging film into a bag (poor non-adsorption properties).

In the case of PLT 2, since Tg of COC is 30°C or lower, there is a problem in that non-adsorption properties cannot be obtained at a higher temperature.

The invention has been made in consideration of the above-described circumstance, and an object of the invention is to provide a resin composition for a sealant capable of improving non-adsorption properties and heat sealing properties with respect to an organic component in an article to be contained, a laminated film and a packaging bag.

### Solution to Problem

To solve the above-described problems, there is provided a resin composition for a sealant in which the resin composition for a sealant is made of a resin obtained by blending a cycloolefin polymer (COP), a cycloolefin copolymer (COC) and polyethylene (PE), and a blending ratio is 42 weight% to 98 weight% of the cycloolefin polymer (COP), 1 weight% to 49 weight% of the cycloolefin copolymer (COC) and 1 weight% to 19 weight% of the polyethylene (PE).

The glass transition temperatures of the cycloolefin polymer (COP) and the cycloolefin copolymer (COC) are both preferably in a range of 50°C to 140°C.

In addition, the invention provides a laminated film including a plurality of layers including a base material and a sealant layer serving as an outermost surface of the laminated film, in which the sealant layer is made of the above-described resin composition for a sealant.

In addition, the invention provides a packaging bag made of the above-described laminated film and including a heat sealing section obtained through heat sealing of the sealant layer.

### Advantageous Effects of Invention

According to the invention, it is possible to provide a resin composition for a sealant capable of improving non-adsorption properties and heat sealing properties with respect to an organic component in an article to be contained, a laminated film and a packaging bag.

### Description of Embodiments

Hereinafter, the invention will be described based on a preferred embodiment.

A resin composition for a sealant of the present embodiment is made of a resin obtained by blending a cycloolefin polymer (COP), a cycloolefin copolymer (COC) and polyethylene (PE), and the blending ratio is 42 weight% to 98 weight% of the cycloolefin polymer (COP), 1 weight% to 49 weight% of the cycloolefin copolymer (COC) and 1 weight% to 19 weight% of the polyethylene (PE).

In addition, a laminated film of the embodiment has a configuration in which a base material, a sealant layer and, if necessary, other intermediate layers are laminated, that is, the laminated film includes a sealant layer serving as an outermost layer of the laminated film, a base material, and, if necessary, a plurality of layers such as other intermediate layers, an adhesive layer and an anchoring layer.

Here, the sealant layer refers to a layer used for heat sealing, and is disposed in an innermost layer in contact with a product contained as a packaging material. The sealant layer is made of the resin composition for a sealant of the embodiment.

The base material or other intermediate layers and the sealant layer may be laminated through an adhesive layer or an anchoring layer, or may be directly laminated on the base material. As the intermediate layers, it is possible to select one or a plurality of a reinforcing layer, a gas barrier layer, a light-shielding layer, a printed layer and the like as appropriate.

The cycloolefin polymer (COP) used for the sealant of the invention is, for example, a homopolymer of a cyclic olefin or a copolymer or hydrogen additive of two or more cyclic olefins, and is generally called a cycloolefin polymer (COP). The COP is preferably a non-crystalline polymer, and more preferably a ring-opened polymer or hydrogen additive of a cyclic olefin obtained through metathesis or the like. The COP is more likely to contain an alicyclic structure and has excellent non-adsorption properties compared with COC and the like, and is thus preferable.

The following chemical formula (Chem. 1) illustrates an example of COP.

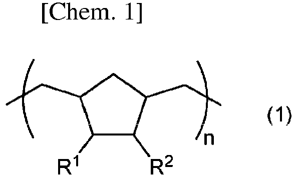

(In the formula, R¹ and R² represent mutually identical or different organic groups having 1 to 20 carbon atoms or a hydrogen atom, and R¹ and R² may mutually form a ring. n represents an integer of 1 or more.)

The cycloolefin copolymer (COC) used for the sealant of the invention is, for example, a copolymer or hydrogen additive of one or more cyclic olefins and one or more non-cyclic olefins, and is generally called a cycloolefin copolymer (COC). The COC is preferably a non-crystalline polymer, and more preferably a copolymer or hydrogen additive of a cyclic olefin and ethylene.

The following chemical formula (Chem. 2) illustrates an example of COC.

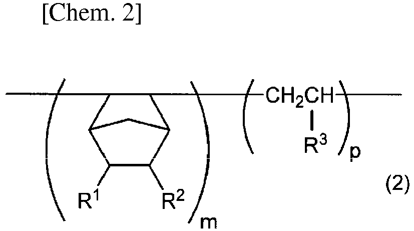

(In the formula, R¹ and R² represent mutually identical or different organic groups having 1 to 20 carbon atoms or a hydrogen atom, and R¹ and R² may mutually form a ring. R³ represents an organic group having 1 to 20 carbon atoms or a hydrogen atom. m and p respectively represent an integer of 1 or more.)

More specific examples of the organic group having 1 to 20 carbon atoms include alkyl groups such as methyl, ethyl, n-propyl, i-propyl, n-butyl, i-butyl, sec-butyl, t-butyl, i-pentyl, t-pentyl, n-hexyl, n-heptyl, n-octyl, t-octyl(1,1-diemthyl-3,3-dimethylbutyl), 2-ethylhexyl, nonyl, decyl, undecyl, dodecyl, tridecyl, tetradecyl, pentadecyl, hexadecyl, heptadecyl, octadecyl, nonadecyl and icosyl; cycloalkyl groups such as cyclopentyl, cyclohexyl, cycloheptyl and cyclooctyl; alkylcycloalkyl groups such as 1-methylcyclopentyl, 1-methylcyclohexyl and 1-methyl-4-i-propylcyclohexyl; alkenyl groups such as allyl, propenyl, butenyl, 2-butenyl, hexenyl and cyclohexenyl; aryl groups such as a phenyl group, a naphtyl group, a methylphenyl group, a methoxyphenyl group, a biphenyl group, a phenoxy phenyl group, a chlorophenyl group and a sulfophenyl group; aralkyl groups such as a benzyl group, 2-phenylethyl group (phenethyl group), α-methyl benzyl group and α,α-dimethyl benzyl group; and the like, but are not limited thereto. In addition, one of the above-described organic groups may be used alone, or two or more thereof may be used in combination.

Preferable examples of the cyclic olefin used as a monomer configuring the COP and the COC include vinyl cycloalkanes including a cycloalkane having 3 to 20 carbon atoms and derivatives thereof, monocycloalkene having 3 to 20 carbon atoms and derivatives thereof, and cycloolefins having a norbornene skeleton (norbornene-based monomers).

Examples of the norbornene-based monomer include bicyclo[2.2.1]-2-heptene(norbornene) and derivatives thereof, tricyclo[4.3.0.1^{2,5}]-3-decene and derivatives thereof, tetracyclo[4.4.0.1^{2,5}.1^{7,10}]-3-dodecene and derivatives thereof, pentacyclo[6.5.1.1^{3,6}.0^{2,7}.0^{9,13}]-4-pentadecene and derivatives thereof, pentacyclo[7.4.0.1^{2,5}.1^{9,12}.0^{8,13}]-3-pentadecene and derivatives thereof, petacyclo[8.4.0.1^{2,5}.1^{9,12}.0^{8,13}]-3-hexadecene and derivatives thereof, pentacyclo[6.6.1.1^{3,6}.0^{2,7}.0^{9,14}]-4-hexadecene and derivatives thereof, hexacyclo[6.6.1.1^{3,6}.1^{10,13}.0^{2,7}.0^{9,14}]-4-heptadecene and derivatives thereof, heptacyclo[8.7.0.1^{2,9}.1^{4,7}.1^{11,17}.0^{3,8}.0^{12,16}]-5-eicosene and derivatives thereof, heptacyclo[8.7.0.1^{3,6}.1^{10,17}.1^{12,15}.0^{2,7}.0^{11,16}]-4-eicosene and derivatives thereof, heptacyclo[8.8.0.1^{2,9}.1^{4,7}.1^{11,18}.0^{3,8}.0^{12,17}]-5-heneicosene and derivatives thereof, octacyclo[8.8.0.1^{2,9}.1^{4,7}.1^{11,18}.1^{13,16}.0^{3,8}.0^{12,17}]-5-docosene and derivatives thereof, nonacyclo[10.9.1.1^{4,7}.1^{13,20}.1^{15,18}.0^{2,10}.0^{3,8}.0^{12,21}.0^{14,19}]-5-pentacosene and derivatives thereof, and the like as illustrated in the following chemical formula (3). Examples of the derivatives include derivatives containing one or more organic groups (R¹, R²) having 1 to 20 carbon atoms as substituents, derivatives having two or more unsaturated bonds like norbornadiene, and the like.

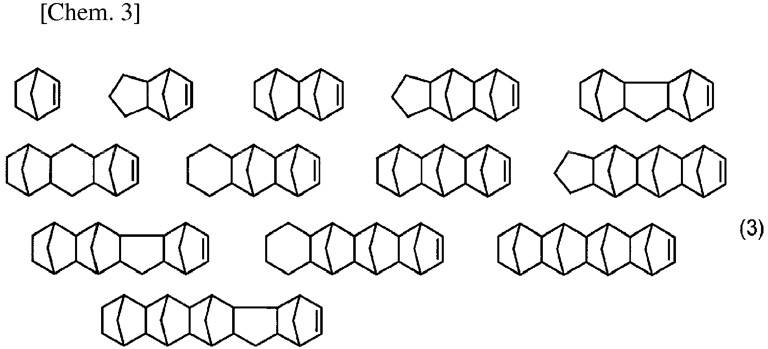

Examples of the non-cyclic olefin used as a monomer configuring the COC include α-olefins such as ethylene, propylene, 1-butene, 1-pentene, 1-hexene, 1-heptene and 1-octene, 3-decene or 3-dodecene, and the like.

The COP is preferably a polymer or hydrogen additive of a cyclic olefin having a norbornene skeleton, and the COC is preferably a polymer or hydrogen additive of a cyclic olefin having a norbornene skeleton and a non-cyclic olefin.

A commercially available cycloolefin polymer can be used as the COP, and, for example, a ZEONEX or ZEONOR manufactured by ZEON Corporation is preferable. A commercially available cycloolefin copolymer can be used as the COC, and, for example, an APEL manufactured by Mitsui Chemicals, Inc. and a TOPAS manufactured by Polyplastics Co., Ltd. is preferable.

Examples of the polyethylene (PE) used for the sealant of the invention include homopolymers of ethylene (ethylene homopolymers), linear low-density polyethylene (C₄-LLDPE) obtained by copolymerizing ethylene and α-olefin having four carbon atoms (1-butene or the like), linear low-density polyethylene (C₆-LLDPE) obtained by copolymerizing ethylene and α-olefin having six carbon atoms (1-hexene or the like), linear low-density polyethylene (C₈-LLDPE) obtained by copolymerizing ethylene and α-olefin having eight carbon atoms (1-octene or the like), ethylene vinyl acetate copolymers (EVA) and the like.

The polyethylene (PE) is preferably in a form of an ethylene homopolymer or a copolymer of ethylene and a non-cyclic olefin other than ethylene (for example, α-olefin).

The melting point or blending amount in the composition of the polyethylene (PE) is preferably selected as appropriate. Compared with a polyolefin-based resin having a relatively high melting point such as polypropylene (PP), an ethylene homopolymer such as metallocene-based linear low-density polyethylene (m-LLDPE. LLDPE polymerized using a metallocene catalyst) or an ethylene-α-olefin copolymer such as C₄-LLDPE, C₆-LLDPE or C₈-LLDPE is preferable since the ethylene homopolymer or the ethylene-α-olefin copolymer is capable of setting the melting point of the sealant layer to an appropriate temperature.

The sealant layer used for the laminated film of the invention is made of the resin composition for a sealant. It is possible to add appropriate additives to the resin composition to the extent that the object of the invention is not impaired. Examples of the additives include an antioxidant, a lubricant, an anti-blocking agent, a flame retardant, an ultraviolet absorber, a light stabilizer, an antistatic agent, a colorant and the like.

The glass transition temperature (Tg) of the resin composition for a sealant is preferably higher than 40°C. The non-absorption properties degrade at a temperature that is equal to or lower than the glass transition temperature. Tg of COP before blending is preferably in a range of 50°C to 140°C, and Tg of COC is preferably in a range of 50°C to 140°C. In addition, Tg of COP before blending is more preferably in a range of 50°C to 130°C, and Tg of COC is also more preferably in a range of 50°C to 130°C.

In the invention, the blending ratio of COP, COC and PE is 42 weight% to 98 weight% of COP, 1 weight% to 49 weight% of COC and 1 weight% to 19 weight% of PE when the total of the three components is set to 100 weight%. Therefore, it becomes possible to obtain a sealant material that is favorable in terms of both sealing strength and non-adsorption properties compared with COP having low sealing strength in spite of excellent non-adsorption properties and COC having poorer non-adsorption properties than COP in spite of excellent sealing strength. In addition, it was possible to confirm a surprising effect that, when the components are blended in the above-described ratio, the degree of tensile elongation significantly improves compared with a case in which COP or COC is used alone. A high degree of tensile elongation indicates that a film is soft and easily extendable.

In addition, the blending ratio of COP, COC and PE is more preferably 43 weight% to 94 weight% of COP, 3 weight% to 48 weight% of COC and 3 weight% to 18 weight% of PE, and still more preferably 44 weight% to 82 weight% of COP, 9 weight% to 46 weight% of COC and 5 weight% to 12 weight% of PE.

The relationship among the blending amounts of COP, COC and PE is that the blending amount of COP is preferably equal to or greater than the blending amount of COC (COP≥COC), and the blending amount of COC is preferably equal to or greater than the blending amount of PE (COC≥PE).

The base material for the laminated film is preferably a stretched film that is excellent in terms of mechanical characteristics such as heat resistance or strength and printing aptitude, and specific examples thereof include a biaxial stretched polyethylene terephthalate (O-PET) film, a biaxial stretched nylon (O-Ny) film, a biaxial stretched polypropylene (OPP) film and the like. The thickness of the base material is generally in a range of 10 µm to 50 µm, and preferably in a range of 10 µm to 30 µm.

An anchoring agent layer or an adhesive layer is preferably provided on the inside surface of the sealant layer to adhere the sealant layer to the base material or other films. In a case in which the sealant layer is formed using an extrusion lamination method, an anchoring agent layer is formed on the inside surface of the sealant layer. In a case in which O-PET is used as the base material, it is also possible not to use the anchoring agent layer. In a case in which a sealant layer that has already been produced in a single-layer film form is adhered to the base material or other films using a dry lamination method, an adhesive layer is formed on the inside surface of the sealant layer. In addition, in a case in which a co-extrusion method is used, an adhesive resin such as an acid-denatured polyolefin may be used.

As an anchoring agent configuring the anchoring agent layer, an anchoring agent that is ordinarily used in the extrusion lamination method such as a polyurethane-based anchoring agent, a polyether-based anchoring agent or an alkyl titanate (organic titanium compound)-based anchoring agent can be used, and the above-described anchoring agents can be selected in accordance with the use of the laminated film.

As an adhesive configuring the adhesive layer, an adhesive that is ordinarily used in the dry lamination method such as a polyurethane-based adhesive or a polyether-based adhesive can be used, and the above-described adhesive can be selected depending on the use of the laminated film.

A gas barrier layer, a reinforcing layer and the like may be present as intermediate layers between the anchoring agent layer or adhesive layer on the inside surface of the sealant layer and the base material.

The reinforcing layer plays a role of reinforcing the strength characteristics of the laminated film. Examples of a resin configuring the reinforcing layer include polyolefin-based resins such as polypropylene (PP) and polyethylene (PE), biaxial stretched polyethylene terephthalate (O-PET), biaxial stretched nylon (O-Ny), biaxial stretched polypropylene (OPP) and the like. The thickness of the reinforcing layer is generally in a range of 5 µm to 50 µm, and preferably in a range of 10 µm to 30 µm.

The gas barrier layer has a function of supplying gas barrier properties to block gas such as oxygen or water vapor from permeating the laminated film. Examples of the gas barrier layer include a metallic foil, an aluminum or inorganic oxide-deposited layer and a gas barrier resin layer made of an ethylene-vinyl alcohol copolymer (EVOH), vinylidene chloride or the like. Meanwhile, it is also possible to use the gas barrier layer as the reinforcing layer. The gas barrier layer can be provided on one surface of the base material or a film configuring the reinforcing layer, and is generally provided as an intermediate layer between the base material and the sealant layer. The inorganic oxide-deposited layer can be used as an outermost layer outside the base material (the outermost layer on the opposite side to the sealant layer in the laminated film).

In a case in which a metallic foil or a gas barrier resin layer is used as the gas barrier layer, the thickness is generally in a range of 5 µm to 50 µm, and preferably in a range of 10 µm to 30 µm. In a case in which a metal-deposited layer or an inorganic oxide-deposited layer is used as the gas barrier layer, it is possible to make the thickness thinner than the above-described range.

A manufacturing method for the laminated film of the invention is not particularly limited, and individual layers configuring the laminated film may be laminated as appropriate using the extrusion lamination method, the dry lamination method, the co-extrusion method or a combination thereof.

In the laminated film of the embodiment, the thickness of the sealant layer is dependent on the use of a packaging material. The thickness is not particularly limited, but is generally in a range of approximately 5 µm to 150 µm, and preferably is in a range of approximately 15 µm to 80 µm.

The laminated film of the embodiment is excellent in terms of both heat sealing properties and processing suitability, and is thus suitable for bag production using an ordinary bag-making machine or form-fill-sealing machine.

A packaging bag of the embodiment is obtained by heat-sealing the above-described laminated film using the sealant layer. Since the packaging bag is excellent in terms of non-adsorption properties and barrier properties with respect to a low molecular weight component, the packing bag is preferably used as a packing bag for foods, beverages, cosmetics, medicine or the like. The packaging bag can be applied with no particular limitation to, for example, an inner pouch for a bag-in-box, a large-scale bag such as a drum interior packing pouch, and the like as well as a packaging bag (pouch) such as a three side-sealed bag, a four side-sealed bag, a butt-seamed bag, a cassette bag or a self-supporting bag.

In a case in which an outlet port is provided in the packaging bag of the invention, any outlet port is preferably used as long as the outlet port can be joined with the sealant layer in the laminated film configuring the packaging bag so as to ensure sealing performance, but it is preferable to use an outlet port made of a resin capable of being heat-sealed with the sealant layer in the laminated film and join the outlet port and the laminated film through heat sealing. In a case in which heat sealing is carried out on the laminated film and the outlet port, it is possible to carry out heat sealing after inserting the outlet port between the laminated films overlapped with the sealant layers disposed inside, or it is possible to provide a flange section or a boat-shape fused base section to an end of the outlet port and heat-seal the flange section or the fused base section to the circumferential edge of a hole provided in the laminated film or the inside surface of an opening section of the packaging bag.

### [Examples]

Hereinafter, the invention will be specifically described using examples.

### (Sealant material)

A sealant material was manufactured using a composition described in Table 1. The sealant material was manufactured using a method in which individual materials were melted, kneaded and extruded, thereby molding a mixture in a film shape having a predetermined thickness.

Meanwhile, COP, COC and PE used in the present example are as described below.

"COP" ··· cycloolefin polymer (manufactured by ZEON Corporation, product name: ZEONOR (registered trademark) 1020R. Tg=102°C, MFR=20 g/10 min (280°C), ρ=1.01 g/cm³)
"COC" ··· cycloolefin copolymer (manufactured by Polyplastics Co., Ltd., product name: TOPAS (registered trademark) 8007F-04. Tg=78°C, MVR=32 cm³/10 min (260°C), ρ=1.02 g/cm³)
"PE(1)" ··· octane-1-copolymerized LLDPE (Tm=121°C, MFR=2.0 g/10 min, ρ=0.923 g/cm³)
"PE(2)" ··· metallocene-catalyzed LLDPE (Tm=55°C, MFR=1.0 g/10 min, ρ=0.870 g/cm³)
"PE(3)" ··· metallocene-catalyzed LLDPE (Tm=126°C, MFR=4.0 g/10 min, ρ=0.937 g/cm³)

**[Table 1]**

| | Composition of sealant (unit: wt%) | | | | |
|---|---|---|---|---|---|
| | COP | COC | PE(1) | PE(2) | PE(3) |
| Example 1 | 90 | 5 | 5 | | |
| Example 2 | 80 | 10 | | 10 | |
| Example 3 | 80 | 10 | | | 10 |
| Example 4 | 80 | 10 | 10 | | |
| Example 5 | 70 | 20 | 10 | | |
| Example 6 | 45 | 45 | 10 | | |
| Comparative Example 1 | 40 | 40 | 20 | | |
| Comparative Example 2 | 100 | | | | |
| Comparative Example 3 | 80 | | 20 | | |
| Comparative Example 4 | 80 | 20 | | | |
| Comparative Example 5 | 20 | 80 | | | |
| Comparative Example 6 | | 80 | 20 | | |
| Comparative Example 7 | | 100 | | | |

### (Manufacturing of a laminated film)

The 30 µm-thick sealant material was adhered to a PET film and an aluminum foil through dry lamination, thereby obtaining a laminated film having a layer structure of PET 12 µm/Al foil 9 µm/sealant material 30 µm.

### (Evaluation method)

A pouch was produced using the above-described laminated film, and evaluation described below was carried out. For (4) tensile properties, a test specimen produced using the sealant material was evaluated.

### (1) Heat seal strength

The seal strength (N/15 mm) of a heat-sealed section in the pouch was measured at a tension rate of 300 mm/min and a width of 15 mm in accordance with JIS Z 1526. The heat sealing condition is heating and pressurization for one second at a pressure of 0.2 MPa in all temperatures of 140°C, 160°C, 180°C, 200°C and 220°C.

### (2) Stable heat seal strength region

A temperature range including the maximum value of the heat seal strength measured in (1) and having a difference from the maximum value in a range of 1 N/15 mm or less was defined as stable region.

### (3) Residual ratio of α-tocopherol acetate

2.5 ml of a commercially available skin lotion containing α-tocopherol acetate (vitamin E acetate) was fed into the pouch as an active component, and the opening section of the pouch was sealed by carrying out heat sealing at a pressure of 0.2 MPa and a temperature of 180°C for one second. After being stored at 40°C for one to three months, the sealed pouch was opened, the residual amount of the α-tocopherol acetate in the skin lotion was measured using high-performance liquid chromatography, and the residual ratio of the active component was computed based on the residual amount. Meanwhile, a pouch for evaluation after one month and a pouch for evaluation after three months were separately prepared, the pouches were opened after the respective storage periods elapsed, and the residual ratios of the α-tocopherol acetate were measured.

### (4) Tensile properties

The tensile strength (N/15 mm) and degree of tensile elongation (%) of the sealant material were measured in accordance with the measurement method described in JIS K 7127 "Testing Method for Tensile Properties of Plastic Films and Sheets". The width of a test specimen was set to 15 mm, and the tension rate was set to 300 mm/min. The grip section for the degree of tensile elongation was set to 50 mm.

The evaluation results are described in Tables 2 and 3. In the column of "heat seal strength" in Table 2, values included in the "stable heat seal strength region" are underlined.

**[Table 2]**

| | Heat seal strength (N/15 mm) | | | | | Stable heat seal strength region |
|---|---|---|---|---|---|---|
| | 140°C | 160°C | 180°C | 200°C | 220°C | |
| Example 1 | 0.7 | 14.6 | 19.1 | 18.1 | 17.1 | 180°C to 200°C |
| Example 2 | 5.0 | 11.0 | 14.7 | 16.3 | 16.6 | 200°C to 220°C |
| Example 3 | 2.0 | 10.9 | 16.2 | 18.2 | 17.0 | None |
| Example 4 | 6.7 | 14.1 | 17.0 | 19.0 | 20.0 | 200°C to 220°C |
| Example 5 | 2.5 | 10.7 | 14.3 | 17.8 | 17.9 | 200°C to 220°C |
| Example 6 | 3.9 | 14.0 | 17.8 | 19.2 | 19.8 | 200°C to 220°C |
| Comparative Example 1 | 7.9 | 12.5 | 12.2 | 13.3 | 14.9 | None |
| Comparative Example 2 | 0.1 | 2.0 | 2.4 | 9.5 | 14.9 | None |
| Comparative Example 3 | 0.2 | 2.2 | 15.6 | 17.5 | 19.8 | None |
| Comparative Example 4 | 9.3 | 13.7 | 16.4 | 16.6 | 16.6 | 180°C to 220°C |
| Comparative Example 5 | 11.2 | 15.2 | 16.0 | 18.9 | 19.8 | 200°C to 220°C |
| Comparative Example 6 | 10.7 | 10.5 | 11.6 | 12.8 | 13.8 | 200°C to 220°C |
| Comparative Example 7 | 12.5 | 13.9 | 20.1 | 18.4 | 14.6 | None |

**[Table 3]**

| | Residual ratio of tocopherol acetate (%) | | Tensile strength (N/15 mm) | Degree of tensile elongation (%) |
|---|---|---|---|---|
| | One month | Three months | | |
| Example 1 | 89.2 | 83.4 | 21.2 | 20.9 |
| Example 2 | 88.5 | 86.8 | 22.6 | 78.0 |
| Example 3 | 90.3 | 85.7 | 19.1 | 66.6 |
| Example 4 | 89.6 | 90.0 | 25.7 | 40.8 |
| Example 5 | 88.0 | 89.7 | 21.4 | 24.4 |
| Example 6 | 91.3 | 84.9 | 20.7 | 106.2 |
| Comparative Example 1 | 89.7 | 81.6 | 14.6 | 72.7 |
| Comparative Example 2 | 89.6 | 96.7 | 25.9 | 4.8 |
| Comparative Example 3 | 88.4 | 95.6 | 22.8 | 14.5 |
| Comparative Example 4 | 85.7 | 86.3 | 28.1 | 4.1 |
| Comparative Example 5 | 84.1 | 82.6 | 19.2 | 3.2 |
| Comparative Example 6 | 80.4 | 79.6 | 19.3 | 5.0 |
| Comparative Example 7 | 83.0 | 81.9 | 27.5 | 3.0 |

The above-described results show that, in Examples 1 to 6, the heat seal strength and the non-adsorption properties were excellent, and the degree of tensile elongation significantly improved compared with the sealant material made of COP alone (Comparative Example 2) or COC alone (Comparative Example 7).

In Comparative Example 1 in which 20% of PE was blended along with COP and COC, the heat seal strength improved only slightly, and the non-adsorption properties after three-month storage at 40°C became poorer than those of the sealant material made of COC alone (Comparative Example 7).

In Comparative Example 2 made of COP alone, sufficient heat seal temperature was obtained at a high temperature of 200°C or higher, and the stable seal strength region was not observed. In addition, the degree of tensile elongation was low.

In Comparative Example 3 made of a mixture of COP and PE, the heat seal strength was higher than that of the sealant material made of COP alone (Comparative Example 2), but rarely improved at 160°C or lower. In addition, the degree of tensile elongation also improved only slightly.

In Comparative Examples 4 and 5 made of a mixture of COP and COC, the heat seal strengths were higher than that of the sealant material made of COP alone (Comparative Example 2), but the degree of tensile elongation was similar.

In Comparative Example 6 made of a mixture of COC and PE, the heat seal strength did not improve more than that of the sealant material made of COC alone (Comparative Example 7), and the non-adsorption properties degraded. In addition, the degree of tensile elongation also improved only slightly.

In Comparative Example 7 made of COC alone, the heat seal temperature was favorable at a low temperature of approximately 180°C, but the heat seal temperature dropped at a temperature of 180°C or higher and the stable seal strength region was not observed. In addition, the degree of tensile elongation was low.

In the example, since the blending amount of COP is equal to or greater than the blending amount of COC, COC functions as an intermediate agent of COP and PE, and it is possible to effectively supply the excellent properties of PE, that is, seal strength and flexibility to COP. In addition, since COC improves the dispersibility of PE, it is possible to control the degradation of non-adsorption properties.

Meanwhile, while not described in the tables, the effects were not exhibited at a blending of COP:COC:PE=1:1:1.

### Industrial Applicability

It is possible to preferably use the invention particularly for packaging of a product contained containing a perfume or an active component such as food, beverage, cosmetic and medicine.

## Claims

1. A resin composition for a sealant,
wherein the resin composition is made of a resin obtained by blending a cycloolefin polymer (COP), a cycloolefin copolymer (COC) and polyethylene (PE), and a blending ratio is 42 weight% to 98 weight% of the cycloolefin polymer (COP), 1 weight% to 49 weight% of the cycloolefin copolymer (COC) and 1 weight% to 19 weight% of the polyethylene (PE).

2. The resin composition for a sealant according to Claim 1,
wherein glass transition temperatures of the cycloolefin polymer (COP) and the cycloolefin copolymer (COC) are both in a range of 50°C to 140°C.

3. A laminated film comprising:
a plurality of layers including a base material and a sealant layer serving as an outermost surface of the laminated film,
wherein the sealant layer is made of the resin composition for a sealant according to Claim 1 or 2.

4. A packaging bag,
wherein the packaging bag is made of the laminated film according to Claim 3, and includes a heat sealing section obtained through heat-sealing of a sealant layer.

## Patentansprüche

1. Harzzusammensetzung für ein Dichtmittel,
wobei die Harzzusammensetzung aus einem Harz hergestellt ist, das durch Vermengen eines Cycloolefinpolymers (COP), eines Cycloolefincopolymers (COC) und von Polyethylen (PE) erhalten wird, und ein Vermengungsverhältnis 42 Gew.-% bis 98 Gew.-% des Cycloolefinpolymers (COP), 1 Gew.-% bis 49 Gew.-% des Cycloolefincopolymers (COC) und 1 Gew.-% bis 19 Gew.-% des Polyethylens (PE) beträgt.

2. Harzzusammensetzung für ein Dichtmittel nach Anspruch 1,
wobei die Glasübergangstemperaturen des Cycloolefinpolymers (COP) und des Cycloolefincopolymers (COC) jeweils im Bereich von 50 °C bis 140 °C liegen.

3. Laminierte Folie, die umfasst:
eine Mehrzahl von Schichten, die ein Basismaterial beinhalten, und eine Dichtmittelschicht, die als äußerste Oberfläche des laminierten Films dient,
wobei die Dichtmittelschicht aus der Harzzusammensetzung für ein Dichtmittel nach Anspruch 1 oder 2 hergestellt ist.

4. Verpackungsbeutel,
wobei der Verpackungsbeutel aus der laminierten Folie nach Anspruch 3 hergestellt ist und einen Wärmeversiegelungsabschnitt beinhaltet, der durch Wärmeversiegeln einer Dichtmittelschicht erhalten wird.

## Revendications

1. Composition de résine pour un produit d'étanchéité,
laquelle composition de résine est fabriquée à partir d'une résine obtenue en mélangeant un polymère de cyclooléfine (PCO), un copolymère de cyclooléfine (CCO) et du polyéthylène (PE), et un rapport de mélange est de 42 % en poids à 98 % en poids du polymère de cyclooléfine (PCO), de 1 % en poids à 49 % en poids du copolymère de cyclooléfine (CCO) et de 1 % en poids à 19 % en poids du polyéthylène (PE).

2. Composition de résine pour un produit d'étanchéité selon la revendication 1,
dans laquelle les températures de transition vitreuse du polymère de cyclooléfine (PCO) et du copolymère de cyclooléfine (CCO) sont toutes deux dans une plage de 50 °C à 140 °C.

3. Film stratifié comprenant :
une pluralité de couches incluant un matériau de base et une couche d'étanchéité servant de surface la plus externe au film stratifié,
dans lequel la couche d'étanchéité est fabriquée à partir de la composition de résine pour un produit d'étanchéité selon la revendication 1 ou 2.

4. Sac d'emballage,
lequel sac d'emballage est fabriqué à partir du film stratifié selon la revendication 3, et inclut une partie thermoscellable obtenue par thermoscellage d'une couche d'étanchéité.
